# EUROPEAN PATENT APPLICATION

(11) **EP 2 747 339 A1**
(43) Date of publication of application: **25.06.2014**
(21) Application number: 12306634.2
(22) Date of filing: 20.12.2012
(51) Int. Cl.: H04L 12/24

(54) **Method for supporting data-communication, a related system and related devices**

(71) Applicant: Alcatel Lucent, 75007 Paris (FR)
(72) Inventor: De Schepper, Koen, 2650 Edegem (BE); Van Tilburg, Rudi, 2960 Brecht (BE)
(74) Representative: ALU Antw Patent Attorneys

(57) **Abstract**

The present invention relates to a method for supporting data-communication between a first communications module and a second communications module over a communications link between the first communications module and the second communications module where this method comprises the steps of at a first communications module setting up a temporary network applying at least one network connection parameter in the setting up of the temporary network and presenting data-communication supporting information, where the data-communication supporting information comprises at least one network connection parameter and data-communication specific data. Subsequently, the second communications module retrieves the data-communication supporting information presented and the second communications module connects to the temporary network of the access point of the first communications module applying the at least one network connection parameter retrieved from the data-communication supporting information. The method also includes the step of starting a first application at the first communications module and a second application at the second communications module where the first and second application require a data-communication over the temporary network between the access point of the first communications module and the second communications module. The first and said second application being uniquely identified by the data-communication specific data.

## Description

The present invention relates to method for supporting data-communication as described in the preamble of claim 1, a related system as described in the preamble of claim 7, a related first communications module as described in the preamble of claim 8 and a related second communications module as described in the preamble of claim 12.

Such method for supporting a data-communication is well known in the prior art. Usually such method for supporting data-communication is applied between a first communications module and a second communications module where such data-communication is to effected over a communications link between the first communications module and the second communications module by first manually establishing a connection on one side like switching on Bluetooth and subsequently at the second side accessing the connection by manually entering the login (access) code obtained from the user of first communications device.

Currently in order to establish such connection between two mobile communication devices for transfer of data file such as pictures, music documents etc from a first device to a second it is necessary to first select the other peer device, like a phone e.g. from a list, subsequently choose an access code (PIN code) to pass to the second peer device, which access code needs to be confirmed on the side of the second peer communications device beforehand the second peer device can access the Bluetooth connection coupling the first and second peer device.

Disadvantageously the connection settings may be remembered at each of both mobile communication devices so that in case both devices encounter again, the connection may be accessed again based on the remembered access code.

On the other hand, another method exists to support a data transfer, if both users have their own internet connection, and a trusted service exists that supports file upload-download between the users.

An objective of the present invention is to provide a method for supporting data-communication method of the above known type but wherein setup of such communications link is temporary, simplified, more secure, and directly between a first - and a second communications module, without the need for an internet connection.

According to an embodiment of the invention there is provided a method for supporting data-communication between a first communications module and a second communications module said data-communication being effected over a communications link between said first communications module and said second communications module wherein said method comprises the steps of:
a. an access point in said first communications module setting up a temporary network applying at least one network connection parameter in said the setting up of said temporary network ; and
b. presenting data-communication supporting information, said data-communication supporting information comprising said at least one network connection parameter and data-communication specific data; and
c. said second communications module retrieving said data-communication supporting information presented; and
d. said second communications module connecting to said temporary network of said access point of said first communications module applying said at least one network connection parameter retrieved from said data-communication supporting information; and
e. starting a first application at said first communications module and a second application at said second communications module said first and said second application requiring a data-communication over a communications link via said temporary network between said access point of the first communications module and said second communications module said first and said second application being uniquely identified by said data-communication specific data.

In this way, by a first access point in the first communications module setting up an temporary network that applies at least one network connection parameter for the set up of the temporary network and by presenting data-communication supporting information at a screen of the first communications module or alternatively at a separate display or wall or elsewhere near the first communications device, where this data-communication supporting information first comprises at least one network connection parameter and additionally data-communication specific data, the second communications module subsequently is able to retrieve the presented data-communication supporting information, from the screen of the first communications module or from a separate display and subsequently, the second communications module connects to the temporary network of the access point of the first communications module by applying the at least one network connection parameter that is determined from the data-communication supporting information retrieved by the second communications module. If not already running, in the meantime or subsequently starting a first application at the first communications module and a second application at the second communications module, where the first and the second application requires a data-communication via a communications link over the temporary network between the access point of the first communications module and the second communications module while the first and the second application being uniquely identified by the data-communication specific data.

Hence in an easy and secure manner, by only retrieving the presented data-communication supporting information, a temporary network can be connected to and a subsequent data-communication can be established over the temporary network coupling both the first and the second communications modules.

The at least one network connection parameter included in the presented data-communication supporting information entails one or more parameters required for connecting to the temporary network. Such at least one network connection parameter may include credentials like SSID/WPA key of a WI-FL connection, device name and access code for Bluetooth or any other applicable credentials for any other networking method.

Further, the data-communication specific data in the data-communication supporting information may include a protocol for the data-communication, an Internet Protocol address and port numbers for the transport layer connection, a URL for download, an application type (mime-type) for the identification of an applicable application, an application name optionally with startup parameters, etc.

The data-communication supporting information may be encoded in e.g. a QR code, and containing for example the SSID/WPA key of a WIFI access point and the URL to be loaded once connected to that access point. Other encoding methods may besides QR codes be other bar codes, special easy detectable character sets, plain text with common character sets detected with OCR etc.

The data-communication supporting information may or may not be encoded.

Further, the data-communication supporting information may be retrieved by means of a camera incorporated or coupled to the second communications module where the camera retrieves the information by reading the data-communication supporting information presented on the screen or alternatively from the separate display. For instance the presented information being encoded in a further referred to as QR-code is read by means of the integrated or coupled QR -reader being a camera together with a QR reader application.

According to another preferred embodiment, the method further comprises the step of the second communications module applying security settings in order to only allow access to the second application requiring the data-communication over the temporary network between the access point of the first communications module and the second communications module if the application is uniquely identified by the data-communication specific data retrieved from the data-communication supporting information.

Such security settings may include setting a (server) port in order to only allow access to the application requiring the data-communication over the connection between the access point and the second communications module if the information of the application matches with the data-communication specific data retrieved by the second communications module from the data-communication supporting information.

In this way only an application that is identified in the retrieved data-communication specific data is allowed to access the temporary network between the access point of the first communications module and the second communications module and hence providing with a secure mechanism for supporting data-communication.

Such a port is an application-specific or process-specific software construct serving as a communications endpoint in a computer's host operating system. A port is associated with an IP address of the host, as well as the type of protocol used for communication where the purpose of ports is to uniquely identify different applications or processes running on a single computer and thereby enable them to share a single physical connection to a packet-switched network like the Internet.

Alternatively, such security setting may include other means such as the operating systems that supports to only allow the first application on the first communication device and the second application on the second communication device to access each other via the temporary network, or to restrict access to specific personal information or categories of functionality (camera access, local file system access, ...).

According to a further preferred embodiment, the method further comprises before the step of the first communications module setting up a temporary network applying at least one network connection parameter in the setting up of the temporary network the step of the first communications module generating said data-communication supporting information including at least one randomly generated network connection parameter and data-communication specific data uniquely identifying said application requiring a data-communication over said connection between the access point of the first communications module and the second communications module. In this way the invention provides with an advantageous mechanism for supporting a secure supporting data-communication as for each separate connection setup, different connection information can be applied so that at the end of the data-communication involving the generated connection information the connection can be released and a possible new second connection can be setup with still different connection information so that the connection cannot be accessed again without explicit permission and new appropriate connection information e.g. being the credentials.

According to a further preferred embodiment, the method further comprises the step of the first communications module applying security settings in order to only allow access to the second application requiring a data-communication over the temporary network between the access point/first communications module and the second communications module if the application is uniquely identified by the data-communication specific data retrieved from said data-communication supporting information.

The applying of security settings may be the first communications module blocking (by means of a firewall) any incoming data, except incoming data originating from the temporary network set up between said access point/ the first communications module and said second communications module. In this way the second communications module is safeguarded for retrieving unintended data.

According to a further preferred embodiment, the method additionally comprises the step of releasing the temporary network and furthermore clearing the data-communication supporting information including the at least one randomly generated network connection parameter and data-communication specific data at termination of either the first or the second application.

In this way after termination of either one of the first or the second application the temporary network set up by means of the first communications network is released and in addition the data-communication supporting information including the at least one randomly generated network connection parameter and data-communication specific data are cleared so that each time such data communication between the first and the second communications module takes place new data-communication supporting information including the at least one randomly generated network connection parameter and data-communication specific data are to be determined. In this way security level has increased by not allowing using old data-communication supporting information again on purpose or accidentally.

According to a further preferred embodiment, the method additionally comprises the step of disconnecting from said temporary network and clearing the retrieved data-communication supporting information including the at least one randomly generated network connection parameter and data-communication specific data at termination of either said first or said second application.

In this way after termination of either one of the first or the second application the second communications module disconnects from the set-up temporary network and in addition the retrieved data-communication supporting information including the at least one randomly generated network connection parameter and data-communication specific data are cleared so that no first communications module may take advantage of the already set data-communication supporting information applied for a data communication between such first and the second communications module and reuses these data-communication supporting information for again without permission of such second communications module setting up or keeping such temporary network and the second communications module connecting to the temporary network leaving a user of the second communications module ignorant

In this way security level has increased by not allowing using previous data-communication supporting information again on purpose or accidentally.

Further characterizing embodiments of the present method for supporting data-communication are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:

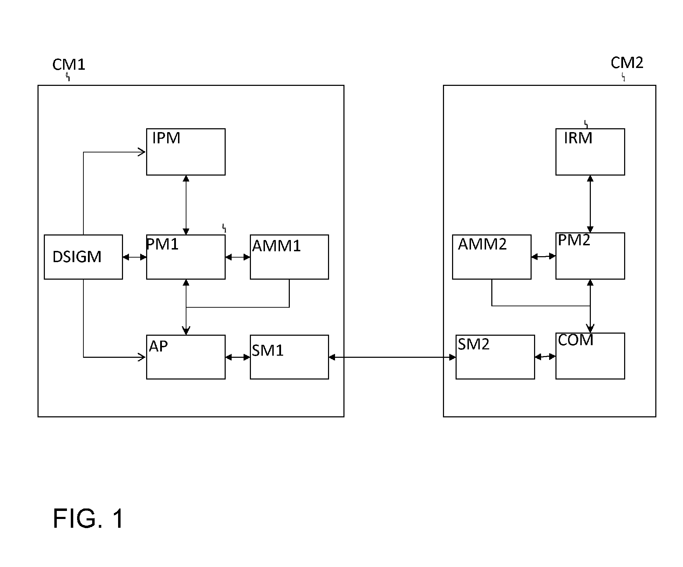

Fig. 1 represents a functional representation of the system for supporting a data-communications, said system including a first communications module CM1 and a second communications module CM2 wherein the implementation of the present invention is realized.

In the following paragraphs, referring to the drawing in FIG.1, an implementation of the system for supporting a data-communications according to the present invention is described. In the second paragraph, the couplings between both communications module are defined.

Subsequently all relevant functional means of the first communications module CM1 and the second communications module CM2 are as presented in FIG.1 are described followed by a description of all interconnections. In the succeeding paragraph the actual execution of the system for supporting a data-communications for Multimedia communication session control communication system is described.

The system for supporting data communication includes a first communications module CM1 and a second communications module CM2 that are to be coupled over a communications link between the first communications module CM1 and a second communications module CM2. Each such communications module being a communications device like a personal computer, a mobile phone such as smart phone. Such communications modules may be able to exchange data such as files like pictures, music documents etc.

The first communications module CM1 and second communications module CM 2 are to be coupled over a temporary network link established by the first communications module CM1 providing an access point where the second communications module CM2 needs to connect to in order to be able to exchange data.

Such a temporary network link may be a temporary Wi-Fi network, a temporary Bluetooth network or any other network means that requires unknown, tedious to type over or (partially) secret parameters to connect to by CM2.

Note that where temporary implies that the network is assumed to be used once (or for a limited time) to achieve a specific task, that the access point may also be persistent over multiple connections from CM2 instances, for example when CM1 is used in combination with an ink-printed presentation of the data-communication supporting information (on a flyer or billboard), and provides a continuous service for communication sessions.

The first communications module CM1 comprises an access point AP that is able to set up a temporary network while applying at least one network connection parameter in the setting up of the temporary network.

The first communications module CM1 further may comprise an information presenting means IPM that is adapted to present data-communication supporting information, where the data-communication supporting information comprises at least one network connection parameter and data-communication specific data for enabling a second communications module to connect to the temporary network set up by the first communications module CM1.

The data-communication supporting information can be presented using the data-communication supporting information encoded in e.g. a QR code, and containing for example the SSID/WPA key of a WIFI access point and the URL to be loaded once connected to that access point. Other encoding methods may besides QR codes be other bar codes, special easy detectable character sets, plain text with common character sets detected with OCR etc.

Alternatively such a presenting means may be external to the first communications device and e.g. may be a separate screen or display (or in a static printed format).

The first communications module CM1 additionally may comprise a means DSIGM for randomly generating the data-communication supporting information including at least one randomly generated network connection parameter and data-communication specific data uniquely identifying the first application and the second application requiring a data-communication over said temporary network between the access point means of the first communications module CM1 and the second communications module CM2 and comprises a security means SM1 that is adapted to apply security settings in order to only allow access to the first application requiring the data-communication over the connection between the access point of the first communications module CM1 and the second communications module CM2 if the application is uniquely identified by the data-communication specific data retrieved from the data-communication supporting information.

The first communications module further may include an application management means AMM1 that is adapted to start a first application at the first communications module CM1 where the first application requires a data-communication over the temporary network between the first communications module CM1 and the second communications module CM2 The first application also is uniquely identified by the data-communication specific data.

The first communications module further may include a central control module for centrally processing and controlling all mentioned steps of the present method wherein the first communications module is involved in.

The second communications module CM2 first comprises an information retrieving means IRM that is adapted to retrieve data-communication supporting information presented, where the data-communication supporting information comprises at least one network connection parameter and data-communication specific data

The retrieving means IRM may be camera integrated in or coupled to the communications module, be a code scanner or alternatively be an infrared receiver, audio signal receiver, or any other parameter-less (optionally directional) local communication means.

The second communications module CM2 additionally includes a connecting means COM, that is adapted to connect to a temporary network of the first communications module while applying the at least one network connection parameter retrieved from the data-communication supporting information and an application management means AMM2 that is adapted to start a second application at the second communications module CM1 where the second application requires a data-communication over an the temporary network between the first communications module CM1 and the second communications module CM2 The second application is uniquely identified by the data-communication specific data.

The second communications module CM2 further comprises security means SM2 that is adapted to apply security settings in order to only allow access to the first application requiring the data-communication over the connection between the first communications module CM1 and the second communications module CM2 if the application is uniquely identified by the data-communication specific data retrieved from the data-communication supporting information.

The second communications module further may include a central control module for centrally processing and controlling all steps wherein the second communications module is involved in.

In order to explain the present invention it is assumed at first that users of a first communications module and a second communications module where both the first communications module and a second communications module are assumed to be a smart-phone intended to exchange a picture, a video clip or other kind of file. In order to exchange this picture a connection link needs to be set-up.

Further, it is assumed at first that the wireless access point in the first communications module CM1 already has set up a temporary wireless network applying at least one network connection parameter in the set up of the wireless temporary network. In this embodiment the temporary network is assumed to be a Wi-Fi temporary network with a at least one network connection parameter being a credential like the SSID/WPA key of the WI-FI temporary network such as an alphanumerical name and a hexadecimal code sequence.

In an alternative embodiment the temporary network could have been chosen to be a Bluetooth network where the at least one network connection parameter is an access code consisting of for example a series of numbers.

In addition, the information presentation means being the integrated screen of the first communications module, i.e. the smart-phone, presents the data-communication supporting information. This data-communication supporting information here includes the network parameters of the WI-FI temporary network being for instance the SSID/WPA key and in addition the data-communication specific data being a for instance a URL of a file to be downloaded over an application layer protocol such as for example HTTP. This SSID/WPA key together with the data-communication specific data is encoded in a QR code and subsequently presented at the screen of the first communication module CM1, .i.e. the Smartphone.

The information retrieving means IRM being the camera together with a QR code reading app running on the processing means PM2 of the second communications module retrieves the QR code presented at the screen of the first communications module by scanning the code by means of the camera and the associated QR code reading application. Subsequently the processing means PM2 decodes the retrieved QR-code and obtains again the SSID/WPA key together with the data-communication specific data is encoded in the QR code.

Subsequently the connecting means COM in the second communications module CM2 connects to the wireless temporary Wi-Fi network of the access point of the first communications module CM1 where the connecting means COM applies the SSID/WPA key for connecting to the temporary network set up by the first communications module CM1.In this way a communications link between the first communications module CM1 and the second communications module CM2 is established for a subsequent data communication between a first application at the first communications module CM1 and a second application at the second communications module CM2.

Subsequently or alternatively in the mean time the application management means AMM2 starts a second application, i.e. a file sharing application running on the processing means PM2 of the second communication module, where this second application requires a data-communication over the temporary Wi-Fi network between the first communications module CM1 and the second communications module CM2. This application to be started is determined based on the uniquely identifying data-communication specific data obtained from the QR-code read from the screen of the first communications module. In another embodiment the application can be fixed (always the same) but the data-communication specific data contains a parameter to instruct the application. In yet another embodiment, the data-communication specific data specifies only the application, and the application on CM2 don't need parameters or the applications can communicate the parameters between themselves.

In addition, also subsequently or alternatively in the mean time the application management means AMM1 starts a first application, i.e. a file sharing application running on the processing means PM1 of the first communication module, where this first application requires a the data-communication over the temporary Wi-Fi network between the first communications module CM1 and the second communications module CM2. This application to be started as well is determined based on the task the user of the first communications module selected.

As an example, the user selects an image in a file, then CM1 will start an HTTP server with optionally restricted access to this image alone, or providing only that file to a client connecting to this server, both via for example the url http://192.168.0.1:80/image1.jpg. Additionally, CM2 will start an HTTP client with startup parameters being the URL to download http://192.168.0.1:80/image1.ipg and output image filename /images/image1.jpg. After the download is completed, the network can be disabled, credentials deleted, and the application management means AMM2 on CM2 can for instance start the media gallery browser on CM2.

When both the first application at the first communications module CM1 and the second application at the second communications module CM2 are actively running and coupled over the Wi-Fi temporary network the data-communication required for the picture exchange can take place.

According to a further preferred embodiment, additionally the first communications module CM1 comprises means DSIGM for randomly generating the data-communication supporting information including at least one randomly generated network connection parameter, in this embodiment a randomly generated SSID/WPA key for the WI-FI temporary network to be set up applying this randomly generated SSID/WPA key.

The means DSIGM for randomly generating the data-communication supporting information further determines the data-communication specific data that uniquely identifies the first application requiring a data-communication over the connection between the access point of the first communications module CM1 and the second communications module CM2.

In this way the invention provides with an advantageous mechanism for supporting a secure supporting data-communication as for each separate connection setup, different connection information can be applied so that at the end of the data-communication involving the generated connection information the connection can be released and an possible new second connection can be setup wit still different connection information so that the connection cannot be accessed again without explicit permission and new appropriate connection information e.g. being the credentials.

The first communications module CM1 is further adapted to release the temporary network and furthermore clear the data-communication supporting information including the at least one randomly generated network connection parameter and data-communication specific data at termination of either the first or the second application.

In this way after termination of either one of the first or the second application the temporary network set up by means of the first communications module releases the temporary network and in addition the data-communication supporting information including the at least one randomly generated network connection parameter and data-communication specific data are cleared by the first communications module so that each time such data communication between the first and the second communications module takes place, new data-communication supporting information including the at least one randomly generated network connection parameter and data-communication specific data are to be determined. In this way security level has increased by not allowing using old data-communication supporting information again on purpose or accidentally.

Moreover, the second communications module disconnects from the temporary network and clears the retrieved data-communication supporting information including the at least one randomly generated network connection parameter and data-communication specific data at termination of either said first or said second application.

In this way after termination of either one of the first or the second application the second communications module CM2 disconnects from the set-up temporary network and in addition the retrieved data-communication supporting information including the at least one randomly generated network connection parameter and data-communication specific data are cleared so that no first communications module may take advantage of the already set data-communication supporting information applied for a data communication between such first and the second communications module and reuses these data-communication supporting information for again without permission of such second communications module setting up or keeping such temporary network and the second communications module connecting to the temporary network leaving a user of the second communications module ignorant

In this way security level has increased by not allowing using previous data-communication supporting information again on purpose or accidentally.

Further by removing the obsolete temporary network settings on CM2 after disconnection from the access point at CM1, CM2's connection list won't be filled with useless network connection settings.

The security means SM2 of the second communications module CM2 is able to apply security settings in order to only allow access to the first application requiring the data-communication over the temporary network between the access point of the first communications module and the second communications module if the application is uniquely identified by the data-communication specific data retrieved from the data-communication supporting information.

Such security settings may include setting a (server) port in order to only allow access to the application requiring the data-communication over the connection between the access point and the second communications module if the information of the application matches with the data-communication specific data retrieved by the second communications module from the data-communication supporting information.

The security means of SM1 of the first communications module is able to apply security settings in order to only allow access to the second application requiring a data-communication over the temporary network between the access point/first communications module and the second communications module if the application is uniquely identified by the data-communication specific data retrieved from said data-communication supporting information.

The applying of security settings may be the first communications module blocking (by means of a firewall) any incoming data, except incoming data originating from the temporary network set up between said access point/ the first communications module and said second communications module. In this way the second communications module is safeguarded for retrieving unintended data.

Hence in an easy and secure manner by only retrieving the presented data-communication supporting information a temporary network can be connected to and a subsequent data-communication can be established over the temporary network coupling both the first and the second communications modules.

In another embodiment the setup of a Bluetooth temporary network at the transmitter i.e. the first communications module automatically is performed, and subsequently this e.g. Bluetooth transmitter provides e.g. a QR code, to be scanned by the receiver, i.e. the second communications module CM2. The QR-code here contains all the info for connecting to the Bluetooth temporary network. After scanning the receiving user just clicks OK to confirm the item to receive. The Bluetooth (or Wi-Fi) connection is suspended, after the transfer, all generated temporary credentials (random PIN codes, network names, access keys, etc) just deleted, and this connection cannot be abused. This takes away the barrier to the devices directly connecting between parties who do not know each other, just like anonymous download a file from a server on the Internet.

Such temporary network could besides a Wi-Fi network, a Bluetooth network alternatively be also a wired network that requires a wire or other means to connect CM1 directly to CM2. This wired network (optionally) also needs configuration parameters to establish a link and the security settings must allow this network to be used as communication means to do the temporary communication.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

Moreover, all statements herein reciting principles, aspects, and embodiments of the invention, as well as specific examples thereof, are intended to encompass equivalents thereof.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Method for supporting data-communication between a first communications module (CM1) and a second communications module (CM2) over a communications link between said first communications module (CM1) and said second communications module (CM2), wherein said method comprises the steps of:
a. said first communications module (CM1) setting up a temporary network applying at least one network connection parameter in the setting up of said temporary network; and
b. presenting data-communication supporting information, said data-communication supporting information comprising said at least one network connection parameter and data-communication specific data; and
c. said second communications module (CM2) retrieving said data-communication supporting information presented; and
d. said second communications module (CM2) connecting to said temporary network of said access point of said first communications module (CM1) applying said at least one network connection parameter retrieved from said data-communication supporting information; and
e. starting a first application at said first communications module (CM1) and a second application at said second communications module (CM1) said first and said second application requiring a data-communication over said temporary network between said access point first communications module (CM1) and said second communications module (CM2) said first and said second application being uniquely identified by said data-communication specific data.

2. Method according to claim 1, wherein said method further comprises the step of said second communications module (CM2) applying security settings in order to only allow access to said first application requiring said data-communication over said connection between said access point first communications module (CM1) and said second communications module (CM2) if said application is uniquely identified by said data-communication specific data retrieved from said data-communication supporting information.

3. Method according to claim 1 or claim 2, wherein said method further comprises before step a. the step of said first communications module (CM1) randomly generating said data-communication supporting information including at least one randomly generated network connection parameter and data-communication specific data uniquely identifying said first application and said second application requiring a data-communication over said temporary network between said access point/first communications module (CM1) and said second communications module (CM2).

4. Method according to claim 1, wherein said method further comprises the step of said first communications module (CM1) applying security settings in order to only allow access to said second application requiring said data-communication over said connection between said access point of said first communications module (CM1) and said second communications module (CM2) if said application is uniquely identified by said data-communication specific data retrieved from said data-communication supporting information.

5. Method according to claim 3, wherein said method further comprises the step of releasing said temporary network and clearing said data-communication supporting information including said at least one randomly generated network connection parameter and data-communication specific data at termination of either said first or said second application.

6. Method according to claim 1, wherein said method further comprises the step of disconnecting from said temporary network and clearing said retrieved data-communication supporting information including said at least one randomly generated network connection parameter and data-communication specific data at termination of either said first or said second application.

7. System for supporting data communication between a first communications module (CM1) and a second communications module (CM2) of said system, over communications link between said first communications module (CM1) and said second communications module (CM2), **CHARACTERISED IN THAT** said system comprises:
a. an access point (AP) in said first communications module (CM1) adapted to set up a temporary network applying at least one network connection parameter in the setup of said connection; and
b. information presenting means (IPM) adapted to present data-communication supporting information, said data-communication supporting information comprising at least one network connection parameter and data-communication specific data; and
c. information retrieving means (IRM), adapted to retrieve said data-communication supporting information presented from said presenting means (IPM); and
d. connecting means (COM), in said second communications module (CM2) adapted to connect to said temporary network of said access point/first communications module (CM1) applying said at least one network connection parameter retrieved from said data-communication supporting information; and
e. application management means (AMM) adapted to start a first application at said first communications module (CM1) and a second application at said second communications module (CM1) said first application and said second application requiring a data-communication over said temporary network between said access point first communications module (CM1) and said second communications module (CM2) said first and said second application being uniquely identified by said data-communication specific data.

8. A first communications module (CM1) for use in a system for supporting data communication between said first communications module (CM1) and a second communications module (CM2) of said system, over a communications link between said first communications module (CM1) and said second communications module (CM2), wherein said first communications module (CM1) comprises:
a. an access point (AP) adapted to set up a temporary network applying at least one network connection parameter in the setting up of said temporary network.

9. A first communications module (CM1) according to claim 8 wherein said first communications module (CM1) further comprises:
b. an information presenting means (IPM) adapted to present data-communication supporting information, said data-communication supporting information comprising at least one network connection parameter and data-communication specific data.

10. A first communications module (CM1) according to claim 8 or claim 9 wherein said first communications module (CM1) further comprises:
c. means (DSIGM) for randomly generating said data-communication supporting information including at least one randomly generated network connection parameter and data-communication specific data uniquely identifying said first application and said second application requiring a data-communication over said temporary network between said access point first communications module (CM1) and said second communications module (CM2).

11. A first communications module (CM1) according to claim 8, claim 9 or claim 10 wherein said first communications module (CM1) additionally comprises:
d. security means (SM1) adapted to apply security settings in order to only allow access to said first application requiring said data-communication over said connection between said access point first communications module (CM1) and said second communications module (CM2) if said application is uniquely identified by said data-communication specific data retrieved from said data-communication supporting information.

12. A second communications module (CM2) for use in a system for supporting data communication between a first communications module (CM1) and said second communications module (CM2) of said system, effected over a communications link between said first communications module (CM1) and said second communications module (CM2), wherein said second communications module (CM2) comprises:
a. an information retrieving means (IRM), adapted to retrieve data-communication supporting information presented, said data-communication supporting information comprising at least one network connection parameter and data-communication specific data.; and
b. connecting means (COM) adapted to connect to a temporary network of said first communications module (CM1) applying said at least one network connection parameter retrieved from said data-communication supporting information; and
c. application management means (AMM2) adapted to start a second application at said second communications module (CM2), said second application requiring a data-communication over said temporary network between said first communications module (CM1) and said second communications module (CM2) said second application being uniquely identified by said data-communication specific data.

13. A second communications module (CM2) according to claim 12, wherein said second communications module (CM2) further comprises security means (SM2) adapted to apply security settings in order to only allow access to said first application requiring said data-communication over said connection between said first communications module (CM1) and said second communications module (CM2) if said application is uniquely identified by said data-communication specific data retrieved from said data-communication supporting information.

14. Communications device including a first communications module (CM2) according to claim 8.

15. Communications device including a first communications module (CM2) according to claim 12.
